# EUROPÄISCHE PATENTSCHRIFT

(11) **EP 0 702 698 B1**
(45) Veröffentlichungstag und Bekanntmachung des Hinweises auf die Patenterteilung: **11.08.1999**
(21) Anmeldenummer: 94917675.4
(22) Anmeldetag: 27.05.1994
(51) Int. Cl.: C08B 30/12

(54) **VERFAHREN ZUR HERSTELLUNG VON THERMOPLASTISCHER STARKE**
PROCESS FOR PRODUCING THERMOPLASTIC STARCH
PROCEDE DE PRODUCTION D'AMIDON THERMOPLASTIQUE

(30) Priorität: 27.05.1993 DE 4317696
(43) Veröffentlichungstag der Anmeldung: 27.03.1996
(73) Patentinhaber: BIOTEC Biologische Naturverpackungen GmbH & Co. KG, 46446 Emmerich (DE)
(72) Erfinder: LÖRCKS, Jürgen, D-46459 Rees (DE); POMMERANZ, Winfried, D-32130 Enger (DE); KLENKE, Kurt, D-47533 Kleve (DE); SCHMIDT, Harald, D-46446 Emmerich (DE); HEUER, Joachim, D-47559 Kranenburg (DE)
(74) Vertreter: VOSSIUS & PARTNER
(86) Internationale Anmeldenummer: EP9401741
(87) Internationale Veröffentlichungsnummer: WO9428029

(56) Entgegenhaltungen:
- EP-A- 0 304 401
- WO-A-90/14938
- CH-A- 679 564
- PATENT ABSTRACTS OF JAPAN vol. 16, no. 548 (C-1005) 18. November 1992 & JP,A,04 210 222 (EISAI CO LTD) 31. Juli 1992

## Beschreibung

Die Erfindung betrifft ein Verfahren zur Herstellung von biopolymerer, thermoplastischer Stärke auf Basis nachwachsender Rohstoffe durch Extrusion in Form eines Bandes, von Fäden oder mit anderer geometrischer Form. Dieses Extrudat kann zu Granulat weiter verarbeitet werden.

Nach heutigem Stand der Technik werden Granulate aus thermoplastischen Stärken und anderen modifizierten Stärken durch einen Extrusionsvorgang hergestellt, so daß am direkten Austritt des Extruders, die heiße, modifizierte Stärke durch ein rotierendes Messer in Granulatstücke geschnitten wird. Während des Extrusionsvorganges wird die Stärke unter Druck und Temperatur desintegriert, wobei normalerweise der natürliche Wassergehalt von 10 bis 20 % ausreicht und gegebenenfalls weitere Lösungsmittel, Additive und Weichmacher zugesetzt werden. Insgesamt wird die plastische, heiße Stärkemasse durch die Reaktionsbedingungen im Extruder und die hohe Scherbeanspruchung mechanisch und/oder physikalischchemisch geschädigt, d.h. als unerwünschter Nebeneffekt wird zwangsläufig ein Molekülabbau des Stärkepolymers in Kauf genommen. Dadurch wird die Bindekraft und die Filmfestigkeit der extrudierten Stärke verschlechtert, denn mit abnehmendem Molekulargewicht nimmt auch die Filmfestigkeit der Stärke ab. Weiterhin wird auch der verwendete Zweiwellenextruder mechanisch durch die hohe Viskosität und Zähigkeit der destrukturierten Stärke überdurchschnittlich stark beansprucht. Das führt dazu, daß entweder sehr teure, verschleißfeste Maschinenteile für das Extrudergehäuse und das Schneckenmaterial eingesetzt werden müssen, oder die entsprechenden Anlagenteile einen überproportionalen Verschleiß mit höhen Kostennachteilen und nicht-konstanter Qualität der erzeugten thermoplastischen Stärke unterliegen. Aufgrund der Verschleißprobleme des Extruders und Qualitätsprobleme der Stärkethermoplaste hat sich dieses z.B. aus der GB-A-2 208 652 bekannte Verfahren bis heute nicht durchsetzen können.

Die WO-A-94 04 600 zeigt ein Verfahren zum Herstellen von biologisch abbaubaren Folien aus pflanzlichen Rohstoffen in Form von Kohlenhydraten, das kontinuierlich und einstufig ist und wobei die Modifizierung und Plastifizierung des pflanzlichen Rohstoffes sowie die Folienherstellung ohne Unterbrechung in einer Verfahrensstufe erfolgen.

Die CH-A-679 564 zeigt ein Extrusionsverfahren, wobei die Ausgangsstoffe (mindestens zum Teil Stärke oder Stärkederivat) zusammen mit Wasser und/oder Alkohol in einem Extruder kontinuierlich verdichtet, erwärmt (dadurch geliert) und durch ein Profilwerkzeug gepreßt werden, während dem Extrusionsprozeß werden annähernd gleiche Temperaturen eingehalten.

Aufgabe der Erfindung ist es, das Verfahren zur Herstellung eines Stärkeextrudats vorzugsweise in gekörnter oder faseriger Form so zu gestalten, daß die Qualität des Produkts verbessert, die mechanische Beanspruchung der Extruderanlage gesenkt und gleichzeitig deren Leistung erhöht wird.

Diese Aufgabe wird mit den Merkmalen der Patentansprüche gelöst.

Bei der Lösung der Aufgabe geht die Erfindung von folgenden Grundgedanken aus:

Thermoplastische Stärke wird mit niedriger Viskosität und niedriger Scherbeanspruchung im Extruderprozeß des integriert und chemisch-physikalisch modifiziert. Die hochviskosen, flüssigen, thermoplastischen Stärken verlassen den Extruder als Band, Spinnfäden oder andere geometrische Form und werden anschließend konditioniert mit dem Ziel der Verfestigung, Stabilisierung und schonenden Nachbehandlung. Nachfolgend kann die erstarrte Stärke granuliert oder zu Fasern weiterverarbeitet und in einem weiteren Konditionierverfahren auf die gewünschte Restfeuchte eingestellt und verpackt werden.

Die Erfindung weist insbesondere folgende Vorteile auf: Schonung der thermoplastischen Stärke, kein Molekülabbau, erheblich besserere Qualität, Schonung der Extruderanlage, keine Verschleißerscheinung, weil die innere Reibung sehr stark minimiert wurde und insbesondere höhere Ausbeute bei niedrigerem Drehmoment und Energieeinsatz. So wird z.B. mit dem erfindungsgemäßen Verfahren die 3-fache Menge der Nennleistung des Zwei-Wellen-Extruders der z.Zt. bekannten Verfahren erreicht.

Die Erfindung soll anhand eines Ausführungsbeispiels erläutert werden:

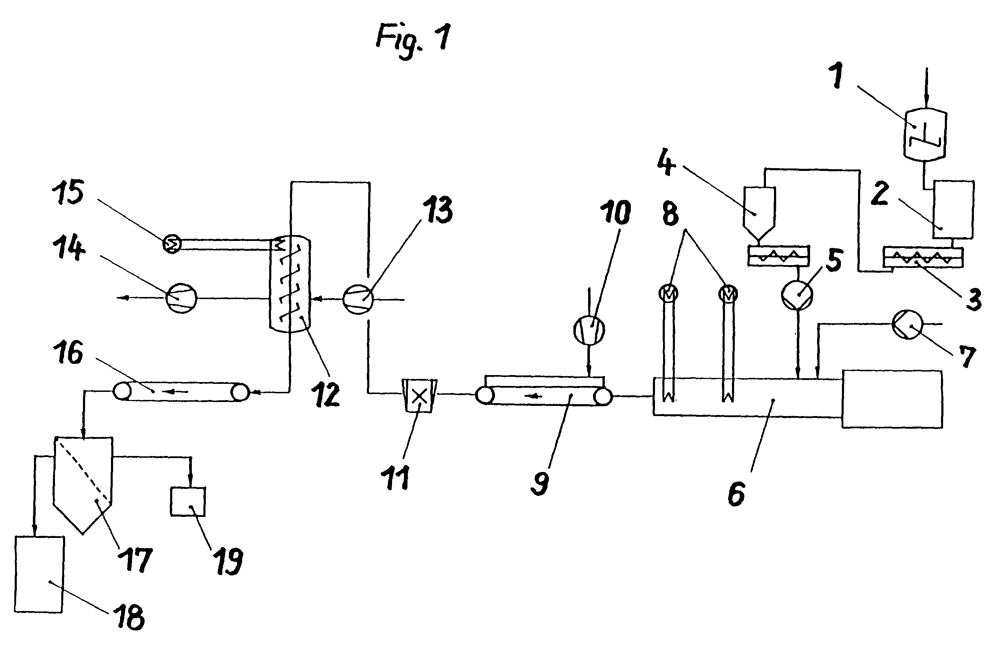

Die dazugehörende Zeichnung zeigt in
- Fig. 1: das erfindungsgemäße Verfahrensprinzip zur Herstellung von gekörnter, thermoplastischer Stärke.

Wie Fig. 1 zeigt, werden nach dem Verfahren zur Herstellung von thermoplastischer Stärke zunächst die Ausgangsstoffe in einer Mischanlage 1 vermischt. Dazu wird ein Rohstoffgemisch aus nachwachsenden Rohstoffen, wie polymere Kohlenhydrate aus Mais, Weizen, Kartoffeln, Tapioka, Hybrid-Mais oder anderen getreide- oder stärkehaltigen Wurzeln oder Knollen verwendet, sowie weitere geeignete Emulgatoren wie Glycerin-Monostearat dem Gemisch beigegeben. Nach dem Vermischen wird die homogene Masse in einen Pufferbehälter 2 gefüllt, der ständig eine ausreichende Gemischmenge für einen kontinuierlichen Verfahrensablauf bevorratet. Von dort transportiert eine Förderschnecke 3 das Gemisch in ein Dosiergerät 4, das über einen ersten Einlaß 5 einen Zweiwellenextruder 6 mit einer vorbestimmten Gemischmenge versorgt. Gleichzeitig mit dem Zuführen der Gemischmenge werden über einen zweiten Einlaß 7 dem Zweiwellenextruder 6 weitere Additive zugegeben, insbesondere plastifizierende, lösungsvermittelnde, hydrophobierende, färbende, filmbildende, filmbildungsfördernde und/oder faserförmige Hilfsmittel. Dazu können u.a. Glycerin zur Unterstützung der Plastifizierung und/oder textile Fasern zur Ausbildung eines Stützgewebes verwendet werden. Insgesamt begünstigen diese weiteren Additive die Herabsetzung der Viskosität der Schmelze und tragen somit zum Erhalt des Molekülaufbaus des Stärkepolymers durch die niedrigere Scherbeanspruchung der Schmelze im Extruderprozeß bei. Ferner wird die mechanische Belastung der Maschinenteile des Extruders erheblich gesenkt und vorzeitge Verschleißerscheinungen an Extrudergehäuse und Extruderschnecke vorgebeugt. Der Anteil an nachwachsenden Rohstoffem im Gemisch beträgt vorzugsweise 50 bis 90 %, kann jedoch auch je nach Anforderung an die Eigenschaften des herzustellenden Stärke-Produkts einen größeren oder geringeren Anteil bilden. Während des Reaktionsablaufes wird das Rohstoffgemisch im Zweiwellenextruder 6 unter Druck und Temperatur (z.B. Erwärmung durch Heizungen 8) destrukturiert und chemisch/physikalisch modifiziert. Durch geeignete Temperatureinstelleinrichtungen kann der zeitliche und örtliche Temperaturverlauf in dem Extruder 6 zur Optimierung der Behandlung eingestellt werden, z.B. entsprechend den Einstellungen gemäß der DE-Patentanmeldung P 42 28 016.0. Unmittelbar vor dem Austreten aus dem Zweiwellenextruder 6 wird die Viskosität der Schmelze durch Flüssigkeitsentzug erhöht, gleichzeitig deren Temperatur gesenkt und die Stärke als Band, Fäden oder in einer anderen geometrischen Form unter einem Druck von z.B. 25 bis 150 bar und z.B. bei 30 bis 220°C, vorzugsweise bei 30 bis 99°C, ausgetragen und gegebenenfalls zu Endlosfasern versponnen.

Auf einer an den Zwei-Wellenextruder 6 anschließenden Behandlungsstrecke 9, z.B. in Form eines umlaufenden Förderbandes, kann das Extrudat mittels einer Belüftungseinrichtung 10 chemisch/physikalisch nachbehandelt, insbesondere konditioniert werden, um das Gefüge zu verfestigen und zu stabilisieren.

Bei Herstellung von Granulat wird die erstarrte Stärke in einer Mühle 11 zerkleinert und gekörnt zum weiteren Entzug von Flüssigkeit, flüchtigen Weichmachern und Hilfsstoffen in einen Trockner 12 gegeben. Der Trocknungsvorgang erfolgt durch kontinuierliches Umwälzen des Granulates im Trockner 12, Be- und Entlüften des Trockners 12, beispielsweise über Ventilatoren 13 und Absaugeinrichtungen 14 sowie mit Hilfe einer Heizung 15. Abschließend wird das Granulat über ein Förderband 16 einem Sieb 17 zum Sortieren zugeführt, danach in einer Abfüllstation 18 gewogen und verpackt. Zur Regulierung der dem Sieb 17 zugeführten Granulatmenge ist dem Sieb 17 ein Überlaufbehälter 19 zugeordnet.

Folgendes Beispiel verdeutlicht die Gemischzusammensetzung und die Verfahrensbedingungen:

In einem Intensivmischer 1 wird eine Mischung von 100 kg Maisstärke und 1 kg Glycerin-Monostearat hergestellt. Diese Mischung wird kontinuierlich mit einem Durchsatz von 45 kg/Std. in einem Zweiwellenextruder 6 "Continua 37" der Werner & Pfleiderer AG, DE, mit einem Schneckendurchmesser von ca. 40 mm zudosiert. Gleichzeitig wird Glycerin mit einer Durchsatzmenge von 15 kg/Std. zudosiert. Durch Kühlung der letzten beiden Zonen wird die Austrittstemperatur am Düsenkopf auf 90°C eingestellt. Bei einer Schneckendrehzahl von 210 U/min stellt sich ein Massedruck von 62 bar ein. Die austretenden Fäden werden auf einem Förderband 9 nachbehandelt und zu einer Mühle 11 gefördert. Das zerkleinerte Material wird kontinuierlich in einem Paddeltrockner 12 auf eine Feuchte von 2 % getrocknet.

## Patentansprüche

1. Verfahren zur Herstellung von thermoplastischer Stärke in gekörnter oder faseriger Form auf der Basis von nachwachsenden, stärkehaltigen Rohstoffen und gegebenenfalls mit festen und/oder flüssigen Additiven, mit den folgenden Verfahrensschritten:
a) Durchmischen der nachwachsenden Rohstoffe, gegebenenfalls mit festen und/oder flüssigen Additiven zu einem homogener Rohstoffgemisch in einer ersten Zone,
b) Zuführen einer dosierten Menge des Rohstoffgemisches in eine zweite Zone,
c) Zuführen einer dosierten Menge weiterer Additive in die zweite Zone,
d) Erhitzen und Reaktion des Rohstoffgemisches und Ausbildung einer Schmelze mit einer ersten Viskosität in einer dritten Zone.
e) Abkühlen und Plastifizieren der Schmelze in einer vierten und fünften Zone und Extrudieren der thermoplastischen Stärke mit einer zweiten Viskosität, die höher ist als die erste Viskosität bei einer Temperatur von 30 bis 99°C und bei einem Druck von 25 bis 150 bar,
f) Konditionieren des Extrudates in einer sechsten Zone und
g) Austragen des Extrudates in einer 7. Zone.

2. Verfahren nach Anspruch 1, wobei das ausgetragene Extrudat in einer 8. Zone getrocknet wird.

3. Verfahren nach Anspruch 1 oder 2, dadurch gekennzeichnet, daß die nachwachsenden Rohstoffe im Rohstoffgemisch polymere Kohlenhydrate aus Mais, Weizen, Kartoffeln, Tapioka, Hybrid-Mais, und anderem Getreide oder stärkehaltigen Wurzeln oder Knollen sind.

4. Verfahren nach einem der Ansprüche 1 bis 3, dadurch gekennzeichnet, daß als ein Additiv Glycerin-Monostearat als Emulgator, vorzugsweise in der ersten Zone zugeführt wird.

5. Verfahren nach einem der Ansprüche 1 bis 4, dadurch gekennzeichnet, daß als weitere Additive plastifizierende, weichmachende, lösungsvermittelnde, hydrophobierende, färbende, filmbildende, filmbildungsfördernde und faserförmige Hilfsmittel vorzugsweise in der zweiten Zone zugeführt werden.

6. Verfahren nach Anspruch 5, dadurch gekennzeichnet, daß als plastifizierendes Hilfsmittel Glycerin zugeführt wird.

7. Verfahren nach Anspruch 5 oder 6, dadurch gekennzeichnet, daß als faserförmiges Hilfsmittel textile Fasern zugeführt werden.

8. Verfahren nach einem der Ansprüche 1 bis 7, dadurch gekennzeichnet, daß das Rohstoffgemisch 5 bis 95 %, vorzugsweise 50 bis 90 %, insbesondere 60 bis 85 % nachwachsende Rohstoffe enthält.

9. Verfahren nach einem der Ansprüche 1 bis 8, dadurch gekennzeichnet, daß vorzugsweise in der ersten Zone die Rohstoffe und Additive in einer Mischanlage (1) zu einem homogenen Rohstoffgemisch vermischt werden.

10. Verfahren nach einem der Ansprüche 1 bis 9, dadurch gekennzeichnet, daß in der 2. bis 5. Zone das Rohstoffgemisch in einem Zweiwellenextruder (6) nach einem Druck-Temperaturprofil erhitzt, destrukturiert, chemisch/physikalisch modifiziert und abgekühlt wird.

11. Verfahren nach einem der Ansprüche 1 bis 10, dadurch gekennzeichnet, daß die modifizierte Stärke als Band, Fäden oder in anderer geometrischer Form extrudiert wird.

12. Verfahren nach einem der Ansprüche 1 bis 11, dadurch gekennzeichnet, daß das Extrudat vorzugsweise in der 6. Zone nachbehandelt wird, indem es unter erhöhtem oder vermindertem Atmosphärendruck mit gasförmigen und/oder flüssigen und/oder festen Hilfsstoffen konditioniert wird.

13. Verfahren nach einem der Ansprüche 1 bis 12, dadurch gekennzeichnet, daß die plastifizierte Stärke nach der Konditionierung, vorzugsweise in der 7. Zone durch einen Zerkleinerungsvorgang in gekörnte, thermoplastische Stärke zerlegt wird und/oder als Endlosfaser ausgetragen wird.

14. Verfahren nach einem der Ansprüche 1 bis 13, dadurch gekennzeichnet, daß das erhaltene Extrudat in einem Trocknungsprozeß, vorzugsweise in der 8. Zone von den flüchtigen Weichmachern und Hilfsstoffen befreit und ein definierter Trockengehalt eingestellt wird.

15. Extrudat in Form von Granulat und/oder Fasern aus Stärke, herstellbar mit dem Verfahren nach einem der Ansprüche 1 bis 14.

## Claims

1. Process for producing thermoplastic starch in granulated or fibrous form on the basis of renewable, starch-containing raw materials and optionally with solid and/or liquid additives, comprising the following process steps:
a) mixing renewable raw materials, optionally with solid and/or liquid additives to give a homogeneous raw material mixture in a first section,
b) adding a dosed amount of the raw material mixture to a second section,
c) adding a dosed amount of further additives to the second section,
d) heating and reacting the raw material mixture and forming a melt with a first viscosity in a third section,
e) cooling and plastifying the melt in a fourth and fifth section and extruding the thermoplastic starch with a second viscosity which is higher than the first viscosity at a temperature of 30 to 99°C and at a pressure of 25 to 150 bar,
f) conditioning the extrudate in a sixth section, and
g) emitting the extrudate in a seventh section.

2. The process according to claim 1, wherein the emitted extrudate is dried in an eighth section.

3. The process according to claim 1 or 2, characterized in that the renewable raw materials in the raw material mixture are polymeric carbohydrates obtained from corn, wheat, potatoes, tapioca, hybrid corn and other cereal or starch-containing roots or tubers.

4. The process according to any one of claims 1 to 3, characterized in that as an additive glycerin monostearate is added as an emulsifier, preferably in the first section.

5. The process according to any one of claims 1 to 4, characterized by adding as further additives plastifying, softening, solubilizing, hydrophobizing, dyeing, film-forming, film-formation enhancing and fibrous additives, preferably in the second section.

6. The process according to claim 5, characterized by adding glycerin as plastifying additive.

7. The process according to claim 5 or 6, characterized by adding textile fibers as fibrous additive.

8. The process according to any one of claims 1 to 7, characterized in that the raw material mixture contains 5 to 95%, preferably 50 to 90%, particularly 60 to 85% cf renewable raw materials.

9. The process according to any one of claims 1 to 8, characterized in that preferably in the first section the raw materials and the additives are mixed in a mixer (1) to give a homogeneous raw material mixture.

10. The process according to any one of claims 1 to 9, characterized in that in the second to fifth sections the raw material mixture is heated, destructurized, chemico-physically modified and cooled off in a twinscrew extruder (6) in accordance with a pressure/temperature profile.

11. The process according to any one of claims 1 to 10, characterized in that the modified starch is extruded in the form of a strip, threads or in another geometrical shape.

12. The process according to any one of claims 1 to 11, characterized in that the extrudate is subjected to an aftertreatment preferably in the sixth section by conditioning it with gaseous and/or liquid and/or solid additives under elevated or reduced atmospheric pressure.

13. The process according to any one of claims 1 to 12, characterized in that in a crushing step after the conditioning step, preferably in the seventh section, the plastified starch is disintegrated into granulated thermoplastic starch and/or emitted as an endless fiber.

14. The process according to any one of claims 1 to 13, characterized in that the volatile softeners and additives are removed from the granules obtained in a drying step, preferably in the eighth section, thereby adjusting a defined content of solid material.

15. Extrudate in the form of a granulate and/or fibers obtained from starch, producible according to the process according to any one of claims 1 to 14.

## Revendications

1. Procédé de production d'amidon thermoplastique sous forme de grains ou de fibre à base de matières premières renouvelables contenant de l'amidon et le cas échéant contenant des additifs solides et/ou liquides, comportant les étapes opératoires suivantes :
a) Mélange approfondi des matières premières renouvelables, le cas échéant avec des additifs solides et/ou liquides, pour donner un mélange homogène de matière première dans une première zone,
b) Ajout d'une quantité dosée du mélange de matière première dans une seconde zone,
c) Ajout d'une quantité dosée d'autres additifs dans une seconde zone,
d) Chauffage et réaction du mélange de matière première et formation d'une masse fondue ayant une première viscosité dans une troisième zone,
e) Refroidissement et plastification de la masse fondue dans une quatrième et cinquième zone et extrusion de l'amidon thermoplastique ayant une seconde viscosité qui est supérieure à la première viscosité, à une température de 30 à 99°C et à une pression de 25 à 150 bars,
f) Conditionnement du produit d'extrusion dans une sixième zone et
g) Retrait du produit d'extrusion dans une septième zone.

2. Procédé selon la revendication 1,
dans lequel
l'extrudé retiré est séché dans une huitième zone.

3. Procédé selon la revendication 1 ou 2,
caractérisé en ce que
les matières premières renouvelables dans le mélange de matières premières sont des hydrates de carbone polymères provenant de maïs, de blé, de pommes de terre, de tapioca, de maïs hybride et d'autres céréales, racines ou tubercules contenant de l'amidon.

4. Procédé selon l'une des revendications 1 à 3,
caractérisé en ce qu'
on introduit comme additif le monostéarate de glycérine en tant qu'émulsifiant, de préférence dans la première zone.

5. Procédé selon l'une des revendications 1 à 4,
caractérisé en ce qu'
on ajoute comme autres additifs des adjuvants plastifiants, ramollissants, tiers-solvants, hydrophobisants, colorants, filmogènes, favorisant la formation de pellicules et favorisant la formation de fibres, de préférence dans la seconde zone.

6. Procédé selon la revendication 5,
caractérisé en ce qu'
on ajoute comme adjuvant plastifiant de la glycérine.

7. Procédé selon la revendication 5 ou 6,
caractérisé en ce qu'
on ajoute comme adjuvant fibreux des fibres textiles.

8. Procédé selon l'une des revendications 1 à 7,
caractérisé en ce que
le mélange de matières premières contient de 5 à 95 %, de préférence de 50à 90 %, en particulier de 60 à 85 % de matières premières renouvelables.

9. Procédé selon l'une des revendications 1 à 8,
caractérisé en ce qu'
on mélange de préférence dans la première zone les matières premières et les additifs dans une installation de mélange (1) pour obtenir un mélange homogène de matières premières.

10. Procédé selon l'une des revendications 1 à 9,
caractérisé en ce qu'
• on chauffe en suivant un profil de pression-température,
• on déstructure,
• on modifie chimiquement et physiquement,
• on refroidit dans la seconde à cinquième zone le mélange de matières premières dans une extrudeuse à deux vis (6).

11. Procédé selon l'une des revendications 1 à 10,
caractérisé en ce que
l'amidon modifié est extrudé sous forme de ruban, de fils ou sous une autre forme géométrique.

12. Procédé selon l'une des revendications 1 à 11,
caractérisé en ce que
le produit d'extrusion est ensuite traité, de préférence dans la sixième zone, en le conditionnant sous une pression atmosphérique augmentée ou diminuée avec des additifs gazeux et/ou liquides et/ou solides.

13. Procédé selon l'une des revendications 1 à 12,
caractérisé en ce que
l'amidon plastifié est divisé après le conditionnement, de préférence dans la septième zone, par un processus de pulvérisation afin d'obtenir un amidon thermoplastique granulé, et/ou est retiré sous forme de fibres sans fin.

14. Procédé selon l'une des revendications 1 à 13,
caractérisé en ce qu'
• on débarrasse des plastifiants volatils et des additifs le produit d'extrusion obtenu dans un processus de séchage, de préférence dans la huitième zone, et
• on établit une teneur en substance sèche définie.

15. Produit d'extrusion sous forme de granulés et/ou de fibres d'amidon que l'on peut préparer avec le procédé selon l'une des revendications 1 à 14.
